# EUROPÄISCHE PATENTSCHRIFT

(11) **EP 2 500 294 B1**
(45) Veröffentlichungstag und Bekanntmachung des Hinweises auf die Patenterteilung: **22.07.2015**
(21) Anmeldenummer: 12001371.9
(22) Anmeldetag: 01.03.2012
(51) Int. Cl.: B65G 1/08, B65G 1/02, B65G 13/00, B65G 47/88

(54) **Rollenbahn zum Transport von Stückgütern, z.B. Paletten oder Kisten**
Roller conveyor for transporting piece goods, e.g. pallets or crates
Transporteur à rouleaux pour le transport de marchandises , p. ex. palettes ou caisses

(30) Priorität: 16.03.2011 DE 202011004045 U
(43) Veröffentlichungstag der Anmeldung: 19.09.2012
(73) Patentinhaber: AQS Logistic Systems GmbH, 57290 Neunkirchen (DE)
(72) Erfinder: Schmale, Erhard, 34479 Breuna-Wettesingen (DE)
(74) Vertreter: Walther, Walther & Hinz GbR

(56) Entgegenhaltungen:
- EP-A2- 1 897 823
- EP-B1- 0 164 527
- DE-A1- 3 129 318
- DE-A1- 4 413 475
- FR-A1- 2 564 809
- US-A- 5 213 189

## Beschreibung

Die Erfindung betrifft eine Rollenbahn zum Transport von Stückgütern, z. B. Paletten oder Kisten, mit mindestens einer Rollenschiene zur Aufnahme mindestens eines Trennglieds und einer Auflaufeinrichtung, wobei die Auflaufeinrichtung am entnahmeseitigen Ende der Rollenschiene angeordnet ist, wobei die Auflaufeinrichtung mit dem Trennglied durch ein Kuppelglied in Verbindung bringbar ist, wobei das Trennglied um eine Achse zwischen einer Passierposition und einer Sperrposition schwenkbar an der Rollenschiene angeordnet ist.

Eine bekannte Rollenbahn zeichnet sich nach einer Variante durch zwei parallel zueinander verlaufende Rollenschienen aus, wobei die Schienen eine Vielzahl von hintereinander angeordneten Rollen aufweisen, auf denen das Stückgut z. B. eine Palette entlang läuft. Mittig kann eine weitere Rollenschiene als Verstärkung vorgesehen sein, die ebenfalls mit hintereinander angeordneten Rollen bestückt ist. Als Variante hierzu kann eine Rollenbahn vorgesehen sein, bei der einzelne in einer Schiene hintereinander angeordnete längliche Rollen in Form von Walzen vorgesehen sind, die die Breite des Stückgutes also insbesondere einer Palette aufweisen. Zum Abbremsen z. B. der Palette weist eine Rollenschiene auch bei dieser Variante beabstandet zueinander mehrere Bremsrollen oder Bremswalzen auf. Durch die Bremsrollen erfolgt nicht nur ein Abbremsen der Paletten, sondern es kann auch eine Vereinzelung der Paletten durch eine entsprechende Anordnung der Bremsrollen vorgenommen werden.

Beide Einrichtungen werden unter dem Begriff "Rollenbahn" durch die Erfindung erfasst, wobei im Folgenden der Begriff der "Rollenschiene" zur Beschreibung einer Rollenbahn mit einer Mehrzahl solcher Schienen verwendet wird, oder aber die Rollenbahn besteht aus einer einzigen Schiene mit länglichen Walzen.

Derartige Rollenbahnen fallen unter die Rubrik der sogenannten "Schwerkraftförderer", d. h. die Rollenbahnen stehen in einem bestimmten Winkel zur Horizontalen, was bewirkt, dass das darauf befindliche Stückgut von allein von der Aufgabeseite zur Entnahmeseite auf den Rollen entlang gleitet. Die einzelnen Stückgüter, und hier insbesondere Paletten können ein erhebliches Gewicht aufweisen. Auf der Entnahmeseite ist dafür zu sorgen, dass das Stückgut vereinzelt an dem dort am Ende der Rollenbahn befindlichen Anschlag anliegt, um keinen Staudruck durch anstehende weitere Paletten entstehen zu lassen. In diesem Zusammenhang ist nun ebenfalls bekannt, die Paletten auf der Rollenbahn zu vereinzeln. Das bedeutet, dass kurz vor der Entnahmeseite etwa in dem Abstand einer Palettenlänge eine sogenannte Trenneinrichtung vorgesehen ist, die eine vordere von den übrigen nachlaufenden Paletten trennt. Die bekannte Trenneinrichtung funktioniert, wie nachstehend beschrieben. An der Entnahmeseite der Rollenschiene einer Rollenbahn befindet sich eine sogenannte Auflaufeinrichtung. Die Auflaufeinrichtung zeigt eine Auflaufklappe, die unter der Last einer Palette in die Horizontale geklappt ist. Die Auflaufeinrichtung umfasst des Weiteren eine Kuppelstange, wobei die Kuppelstange mit der Trenneinrichtung in Verbindung steht. Die Verbindung ist hierbei derart, dass bei einer auf der Auflaufeinrichtung stehenden Palette über die Kuppelstange ein Trennglied der Trenneinrichtung in die vertikale Position, die sogenannte Sperrposition überführt wird und die nachfolgende Palette stoppt. Wird nun die am entnahmeseitigen Ende an dem Anschlag anstehende Palette beispielsweise durch einen Gabelstapler entnommen, dann stellt sich die Auflaufklappe wieder auf. Dies mit der Folge, dass das Trennglied durch die Kuppelstange abgeklappt wird, mithin der Weg für die nachfolgende Palette in Richtung der Entnahmeseite freigegeben wird. Die Passierposition des Trenngliedes wird so lange aufrechterhalten, bis die Palette, die das Trennglied passiert hat, die Auflaufklappe erneut nach unten verschwenkt.

Es wurde in diesem Zusammenhang bereits erwähnt, dass die Rollenschienen oder die Rollenschiene einer Rollenbahn sowohl in Abhängigkeit von dem Neigungswinkel, als auch in Abhängigkeit von dem Gewicht der darauf transportierten Stückgüter eine gewisse Anzahl von Bremsrollen aufweist, um die Geschwindigkeit mit der die einzelnen Paletten die Rollenbahn entlang laufen zu reduzieren. Hierbei ist üblicherweise vorgesehen, dass die Rollenschiene hinter der Trenneinrichtung, also in Richtung der Aufgabeseite über eine Mehrzahl an Bremsrollen verfügt, wohingegen die Rollenschiene nach der Trenneinrichtung, also in Richtung der Entnahmeseite über keine oder zumindest weniger Bremsrollen verfügt. Die Folge hiervon ist, dass die Palette nach der Trenneinrichtung wesentlich schneller läuft, als die Palette vor der Trenneinrichtung. Dies hat weiterhin zur Folge, dass die Palette, die die Trenneinrichtung passiert hat, relativ gesehen zügig bis in den Bereich der Auflaufklappe und den dort befindlichen Anschlag gelangt, mit der Folge, dass dann durch die Zwangskopplung der Auflaufklappe mit der Trenneinrichtung bzw. dem Trennglied das Trennglied über die Kuppelstange in die Sperrposition überführt wird. Die Rollenbahn hinter der Trenneinrichtung, also in Richtung der Aufgabeseite, ist so ausgebildet, dass die dort befindlichen Paletten so langsam laufen, dass sie in den Bereich des Trenngliedes erst dann gelangen, wenn das Trennglied wieder in die Sperrposition verschwenkt worden ist.

Problematisch ist der Einsatz einer derart ausgebildeten Rollenschiene dann, wenn die auf der Rollenbahn transportierten Paletten eine zulässige Länge wesentlich über- oder unterschreiten. Bei wesentlich kürzeren Paletten passiert Folgendes:

Die Palette passiert das Trennglied. Die Palette ist nun allerdings so kurz, dass die Zeit, bis sie auf die Auflaufklappe gelangt, und das Trennglied in Sperrposition verbringen kann, wesentlich länger geworden ist. Das bedeutet, dass die nachfolgende Palette möglicherweise bereits das Trennglied passiert hat, oder sich unmittelbar über dem Trennglied befindet, wenn das Trennglied in die Sperrposition überführt wird. Hat die nachfolgende Palette das Trennglied bereits passiert, dann stehen nunmehr zwei Paletten an der Entnahmeseite an, möglicherweise mit der Folge, dass die zweite Palette die Aufstellung des Trenngliedes blockiert, eben weil sie sich auch noch über dem Trennglied befindet. Oder aber die vordere Palette gelangt auf das Auflaufglied zu einem Zeitpunkt, an dem sich die zweite nachlaufende Palette gerade über dem Trennglied befindet. In beiden Fällen wird das Ergebnis sein, dass sich die Trenneinrichtung verspannt, was möglicherweise zur Zerstörung oder Beschädigung der Trenneinrichtung führt. Gleiches kann auch passieren, wenn die Paletten eine gewisse Länge überschreiten. Dann besteht die Gefahr, dass diese Palette mit dem vorderen Ende bereits auf der Auflaufklappe aufsteht, wohingegen das hintere Ende sich noch im Bereich der Trenneinrichtung befindet. Auch in diesem Fall kann es zu einer Beschädigung oder gar einer Zerstörung der Trenneinrichtung kommen.

Die Trenneinrichtung wird ebenfalls blockiert, wenn die nachfolgende Palette zu schnell läuft, wenn z. B. eine oder mehrere Bremsrollen nicht funktionsfähig sind.

Sowohl aus der DE 31 29 318 A1 als auch aus der EP 0 164 527 B1 ist eine Vorrichtung zum Trennen von Paletten auf einer Rollenbahn bekannt. Hierbei weist die Rollenbahn endseitig eine Schaltklappe auf, die durch einen Hebelmechanismus mit einer Trenneinrichtung in Verbindung steht. Die Trenneinrichtung umfasst eine Kniehebelanordnung mit einem Arretierhebel zum Blockieren einer Palette, wobei die Kniehebelanordnung durch den Hebelmechanismus in eine Übertotpunktlage gebracht wird, wenn der Arretierhebel sich in Sperrposition befindet. Der Hebelmechanismus umfasst eine Stange, auf der eine Feder gelagert ist. Die Schaltklappe steht durch einen Winkelhebel mit der Stange derart in Verbindung, dass durch den Winkelhebel gegen die Kraft der Feder auf der Stange der Kniehebel in die Übertotpunktlage bringbar ist.

Aus der EP 1 897 823 A2 ist ein Durchlaufregal mit Separiereinrichtung bekannt. Hierbei ist ein Anschlagelement vorgesehen, das durch eine Kulisse gesteuert wird. Die Kulisse steht durch eine Betätigungsstange mit einer Steuerfahneneinrichtung in Verbindung. Die Steuerfahneneinrichtung ist in der Ebene des Durchlaufregals einschwenkbar, wenn sie durch z. B. eine Palette belastet wird. Hierbei wird dann die Kulisse verschoben mit der Folge, dass durch die Kulisse das Anschlagelement in Sperrposition überführt wird. Unter bestimmten Umständen kann es bei der Entnahme von z. B. eine Palette zu Verspannungen in der Separiervorrichtung kommen.

Die der Erfindung zugrunde liegende Aufgabe besteht demzufolge darin vorzusehen, dass unabhängig von der Länge der auf der Rollenbahn transportierten Stückgüter das Trennglied dann in Sperrposition überführbar ist, wenn die Rollenbahn in diesem Bereich frei ist. Das heißt, es soll insbesondere eine Beschädigung oder Zerstörung der Trenneinrichtung insgesamt vermieden werden.

Zur Lösung der Aufgabe ist erfindungsgemäß vorgesehen, dass das Trennglied bei entlasteter Auflaufeinrichtung nach Passieren eines Stückgutes selbstständig in die Sperrposition übergeht, dass das Kuppelglied ein Arretierauge aufweist, in das das Trennglied in der Sperrposition eingreift, wobei das Trennglied ein Langloch zur Aufnahme durch die Achse aufweist, wobei das Trennglied parallel zur Längsachse des Trenngliedes verschieblich auf der Achse verschwenkbar gelagert ist. An dieser Stelle sei noch einmal darauf hingewiesen, dass der Stand der Technik eine starre Verbindung zwischen der Auflaufeinrichtung sprich der Auflaufklappe und dem Trennglied vorsieht. Dies insofern, als sowohl das Verschwenken des Trenngliedes in die Passierposition als auch das Aufschwenken des Trenngliedes in die Sperrposition durch die Kuppelstange quasi zwangsgesteuert ist. Dadurch nun, dass nach Aufstellen der Auflaufklappe durch Entnahme der darauf befindlichen Palette, das Trennglied selbstständig, d. h. völlig unabhängig von der Stellung der Kuppelstange, in die Sperrposition überführbar ist, besteht nunmehr nicht mehr die Möglichkeit, dass die Größe bzw. die Länge der Palette Einfluss auf die Funktionsfähigkeit der Rollenbahn als solche nehmen kann. Das heißt, der Kern der Erfindung besteht darin, das Trennglied weder zwangsgesteuert in die Sperrposition noch zwangsgesteuert in die Passierposition zu überführen; vielmehr soll das bloße Verschwenken des Trenngliedes unabhängig von der Stellung der Auflaufklappe und demzufolge auch unabhängig von der Lage der Kuppelstange erfolgen, das Trennglied aber tatsächlich eine sperrende Position einnehmen, die abhängig ist von der Stellung der Auflaufklappe.

Im Einzelnen ist in diesem Zusammenhang vorgesehen, dass das Trennglied als Finger ausgebildet ist, wobei das Trennglied um die Achse schwenkbar durch die Rollenschiene aufgenommen ist. Die Achse kann hierbei die beiden Schenkel des U-förmigen Rahmens einer Rollenschiene erfassen, wobei darüber hinaus in einem solchen U-förmigen Rahmen auch mehrere solche Trennglieder nebeneinander vorgesehen sein können.

Nach einem besonderen Merkmal der Erfindung ist das Trennglied unter der Last einer Federeinrichtung in die Sperrposition überführbar. Hieraus wird deutlich, dass das Trennglied also beispielsweise der Finger durch die anstehende Palette entgegen der Kraft einer Feder in die Passierposition, d. h. in eine im Wesentlichen parallel zur Rollenschiene befindliche Position verschwenkbar ist, um dann nach Passieren der Palette aufgrund der Federkraft in eine Position senkrecht zur Rollenschiene zu verschwenken, d. h. die Sperrposition einzunehmen. Zur Arretierung des Sperrgliedes in der Sperrposition ist nach einem besonderen Merkmal der Erfindung vorgesehen, dass die Auflaufeinrichtung mit dem Trennglied durch ein Kuppelglied in Verbindung steht, wobei das Kuppelglied ein Arretierauge aufweist, in das das Trennglied in der Sperrposition eingreift. Hieraus wird Folgendes deutlich:

Das Kuppelglied, das insbesondere als Kuppelstange ausgebildet ist, steht mit der Auflaufeinrichtung ausgebildet beispielsweise in der Form einer Auflaufklappe in Verbindung. Die Kuppelstange wird durch Verschwenken der Auflaufklappe entgegen der Kraft einer Feder ausgelenkt. Im Bereich des Trenngliedes weist das als Kuppelstange ausgebildete Kuppelglied das bereits zuvor erwähnte Arretierauge auf. Das Arretierauge befindet sich in auf die Rollenschiene zugeschwenkter Position der Auflaufklappe in einer Lage unterhalb des Trenngliedes derart, dass das Trennglied bei Einsitzen in dem Arretierauge in der Sperrposition gehalten ist. Das heißt, bei auf der Auflaufeinrichtung aufsitzender Palette wird durch das mit der Auflaufeinrichtung verbundene Kuppelglied in Form der Kuppelstange das Trennglied in der Sperrposition gehalten, und zwar dadurch, dass das Trennglied in das Arretierauge der Kuppelstange eingreift. Wird nun die Palette entnommen, wird das Kuppelglied, das unter Last einer Zugfeder steht in eine Position gezogen, die es ermöglicht das Trennglied im Wesentlichen frei zu verschwenken. Die Verschwenkung des Trenngliedes erfolgt dann durch die an dem Trennglied anstehende Palette aufgrund der Gewichtskraft, die durch die Palette auf das Trennglied ausgeübt wird.

Nach der Erfindung ist des Weiteren vorgesehen, dass das Trennglied über ein Langloch mit der Achse in Verbindung steht. Das Langloch erstreckt sich parallel zur Längsachse des Trenngliedes. Dies vor folgendem Hintergrund:

Geht man für die weiteren Überlegungen zunächst davon aus, dass die Auflaufklappe verschwenkt ist, mithin auf der Auflaufklappe beispielsweise eine Palette aufsteht. In diesem Zustand befindet sich das Trennglied in Sperrposition, da es sich in Eingriff mit dem Arretierauge der Kuppelstange befindet. Geht man nun davon aus, dass die Palette an der Entnahmeseite abgenommen wird, dann verschwenkt die Auflaufklappe nach oben, was zur Folge hat, dass die Kuppelstange mit dem Arretierauge eine Stellung relativ zum Trennglied einnimmt, bei der das Trennglied bei Krafteinwirkung durch eine nachfolgende Palette in die im Wesentlichen horizontale Passierposition überführt wird. Dies ist an sich bekannt, und auch beschrieben worden. Die Palette nun, die über das Trennglied läuft, und das Trennglied hierdurch in der Passierposition hält, trifft zu irgendeinem Zeitpunkt auf die Auflaufklappe und verschwenkt die Auflaufklappe in Richtung auf die Rollenbahn zu. Die Folge hiervon ist, dass die Kuppelstange mit dem Arretierauge bereits in die Eingriffsstellung zur Aufnahme des Trennglieds überführt wird, obwohl sich das Trennglied noch in horizontaler Position befindet. Dies ist beispielsweise der Fall, wenn die Palette eine Länge aufweist, für die der Abstand zwischen der Auflaufklappe einerseits und der Trenneinrichtung andererseits nicht vorgesehen ist, wie dies ebenfalls bereits an anderer Stelle erläutert worden ist. Wird nun die zwischenzeitlich auf der Auflaufklappe aufstehende Palette, die noch bis in den Bereich der Trenneinrichtung ragt, abgenommen, oder besser gesagt von der Rollenbahn abgezogen, dann wird unmittelbar dann, wenn die Palette das Trennglied freigibt, sich die Kuppelstange mit dem Arretierauge allerdings noch in Sperrposition befindet das Trennglied dennoch die Sperrposition einnehmen, und zwar dadurch, dass das Sperrglied bei Auftreffen auf die Kuppelstange hinter dem Arretierauge in Richtung der Aufgabeseite gesehen entlang dem Langloch nach oben ausweichen kann, und dann dennoch in das Arretierauge gelangt. Das Trennglied "schrappt" mit seinem Ende also entlang des Randes des Arretierauges in das Arretierauge und wird dann in dem Arretierauge gehalten. Hieraus folgt unmittelbar, dass dann wenn, aus welchen Gründen auch immer, die Auflaufklappe herabgedrückt ist, dennoch das Trennglied in die Sperrposition überführt werden kann, und somit den Lauf der nächsten Palette sperren kann, mit der Folge, dass das Trennglied den Lauf dieser Palette erst dann freigibt, wenn die vordere Palette tatsächlich die Entnahmeseite verlassen hat. Für die Bewegung des Trenngliedes sei daran erinnert, dass dieses unter der Last einer Feder steht, die das Trennglied einerseits in die Sperrposition aber gleichzeitig auch in Richtung des Arretierauges zieht.

Anhand der Zeichnungen wird die Erfindung nachstehend beispielhaft näher erläutert:
- Fig. 1: zeigt die Rollenbahn mit drei Rollenschienen in perspektivischer Darstellung, wobei auf der Auflaufeinrichtung eine Palette aufsteht;
- Fig. 2: zeigt eine Darstellung gemäß Fig. 1, bei der die Palette abgenommen ist, und wobei die Auflaufklappe der Auflaufeinrichtung aufgeschwenkt ist;
- Fig. 3: zeigt eine Darstellung einer Rollenschiene gemäß Fig. 2 in einer Seitenansicht im Schnitt bei ankommender Palette;
- Fig. 3a: zeigt die Einzelheit "x" in vergrößerter Darstellung;
- Fig. 4: zeigt eine Seitenansicht der Rollenschiene gemäß Fig. 3 bei an dem Anschlag anstehender Palette;
- Fig. 4a: zeigt die Einzelheit "y" in vergrößerter Darstellung;
- Fig. 5: zeigt die Rollenschiene von oben;
- Fig. 6 bis Fig. 8: zeigen die Wirkungsweise der Trenneinrichtung bei einer Palette, die zu lang ist;
- Fig. 9: zeigt das Trennglied im Übergang von dem Rand des Arretierauges in das Arretierauge bei abgeklappter Auflaufklappe.

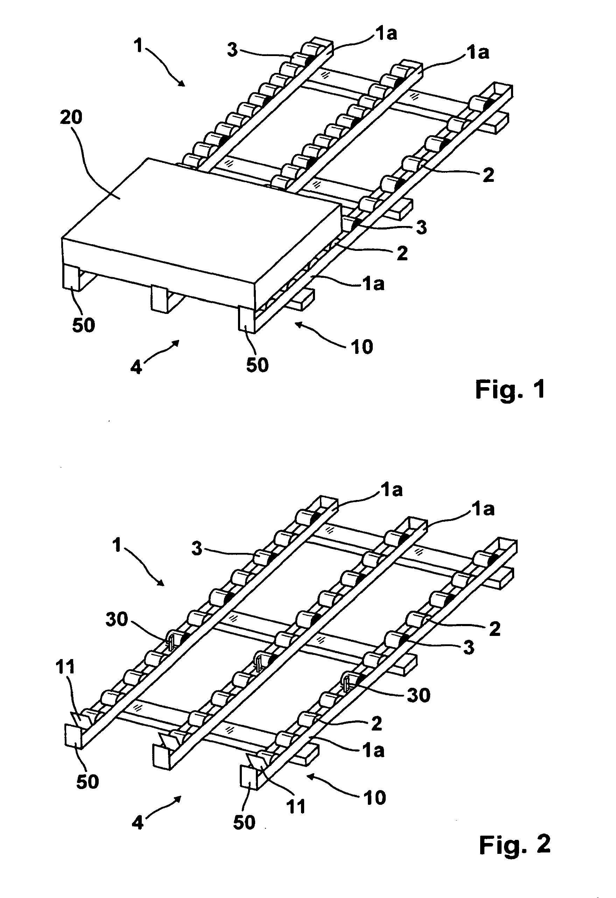

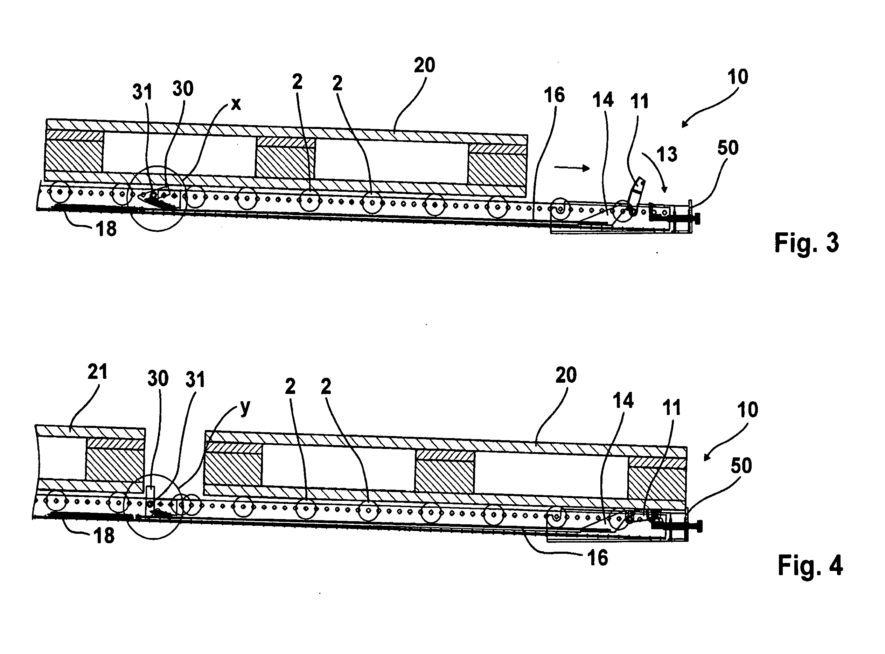

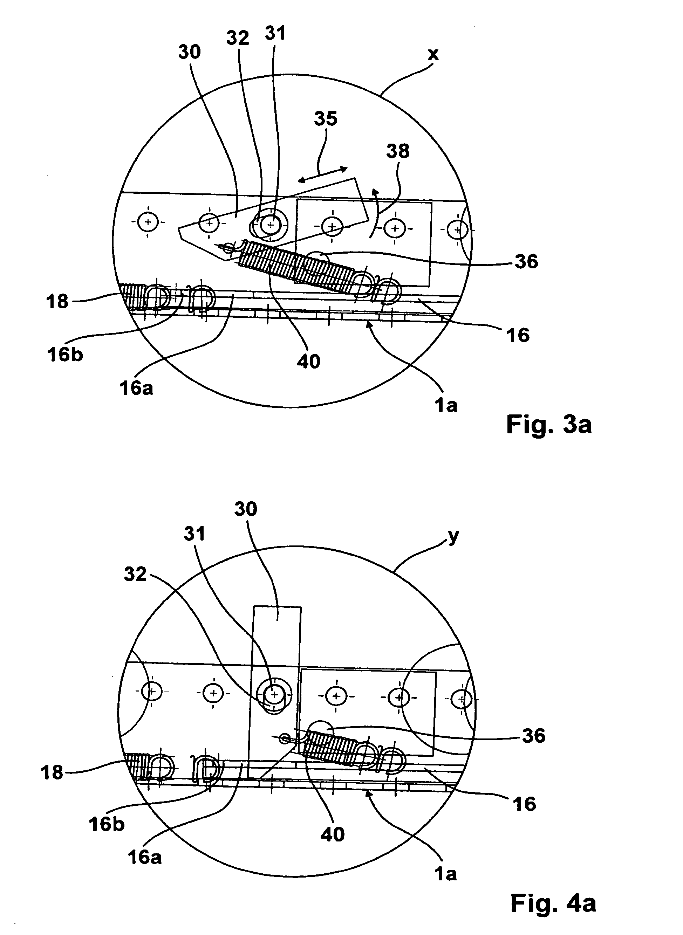

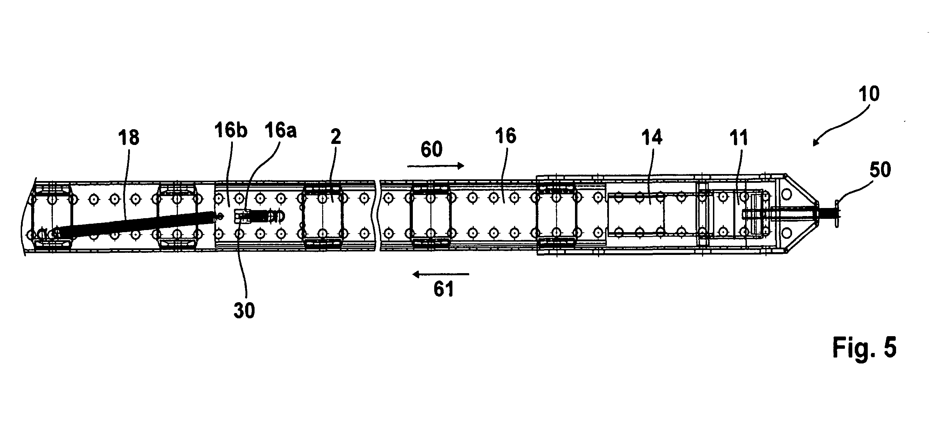

Aus den Darstellungen gemäß Fig. 1 bis Fig. 9 ist die Rollenbahn mit 1 bezeichnet. Die Rollenbahn umfasst mehrere Rollenschienen 1 a mit Rollen 2 sowie zwischen den Rollen 2 angeordnete Bremsrollen 3. Am entnahmeseitigen Ende 4 befindet sich an jeder Rollenschiene die Auflaufeinrichtung 10. Die Auflaufeinrichtung 10 umfasst jeweils eine Auflaufklappe 11, die durch die Palette 20 bei Aufsitzen auf der Auflaufeinrichtung in Richtung des Pfeiles 13 auf die Rollenschiene zuklappt. Für die nähere Erläuterung der Funktionsweise der Vorrichtung wird im Folgenden nun auf die Fig. 3 (Fig. 3a), Fig. 4 (Fig. 4a) und Fig. 5 Bezug genommen. In der Fig. 3 überfährt die Palette 20 das mit 30 bezeichnete Trennglied. Das Trennglied 30 ist, wie sich dies aus der Darstellung entnehmen lässt, durch eine Achse 31 in der Rollenschiene 1 a schwenkbar gelagert. Das Trennglied weist zur Aufnahme durch die Achse 31 ein sich parallel zur Längsachse des Trenngliedes 30 erstreckendes Langloch 32 auf, sodass das Trennglied in Richtung des Doppelpfeiles 35 (Fig. 3a) verschieblich durch die Achse 31 aufgenommen ist. Am unteren Ende ist eine Feder 40 angelenkt, die dafür sorgt, dass das Trennglied 30 in Richtung des Pfeiles 38 aufgeschwenkt wird, hierbei aber immer nach unten, d. h. in Richtung der Kuppelstange 16 gezogen wird. Dies wird dadurch bewerkstelligt, dass die Feder um einen Bolzen 36 in Richtung nach unten umgelenkt wird. Die mit 10 bezeichnete Auflaufeinrichtung mit der Auflaufklappe 11 ist schwenkbeweglich in Richtung des Pfeiles 13 in der Rollenschiene gelagert. Die Auflaufklappe 11 steht durch einen Zugbock 14 mit der Kuppelstange 16 in Verbindung (Fig. 3). Die Kuppelstange 16 erstreckt sich vom Zugbock 14 bis in den Bereich des Trenngliedes 30. Im Bereich des Trenngliedes 30 besitzt die Kuppelstange 16 das Arretierauge 16a, wie sich dies auch aus Fig. 5, aber auch den Fig. 3a, 4a entnehmen lässt. Die Kuppelstange 16 steht darüber hinaus durch die Feder 18 unter einer Zugkraft derart, dass bei Verschwenken der Auflaufklappe 11 in Richtung des Pfeiles 13 die Feder 18 ausgelenkt, d. h. gespannt wird, da sich die Kuppelstange in Richtung des Pfeiles 60 bewegt (Fig. 5).

Die Funktionsweise der Vorrichtung bei einer normal langen Palette wird nun anhand der Fig. 3, 3a und 4, 4a näher erläutert. In Fig. 3 läuft gerade eine Palette 20 über das Trennglied 30 in Richtung auf den mit 50 bezeichneten Anschlag auf der Entnahmeseite. Die Auflaufklappe 11 befindet sich in aufgeschwenkter Stellung. Das Trennglied 30 wird durch die Palette in abgeschwenkter Position gehalten, während sie über das Trennglied läuft. Das heißt, dass beim Überlaufen der Palette über das Trennglied 30 durch die Palette das Trennglied in der abgeschwenkten Stellung gemäß Fig. 3 gehalten wird. Das Verschwenken des Trenngliedes 30 erfolgt entgegen der Kraft der Feder 40. Hat die Palette 20 das Trennglied 30 passiert, wie dies in Fig. 4 dargestellt ist, befindet sich die Palette am Anschlag 50 und unmittelbar über der Auflaufeinrichtung 10 mit der Auflaufklappe 11. Das heißt, die Auflaufklappe 11 ist in Richtung des Pfeiles 13 verschwenkt, wobei in dieser Position die Kuppelstange 16 in Richtung des Pfeiles 60 verschoben worden ist. Hierbei gelangt das Arretierauge 16a in eine Lage gemäß Fig. 4 bzw. Fig. 4a, in der das Trennglied 30 in das Arretierauge 16a aufgrund der Kraft der Feder 40 einschwenkt, wie sich dies deutlich aus Fig. 4a entnehmen lässt. Die hintere Kante 16b des Arretierauges befindet sich unmittelbar an dem Trennglied 30 mit der Folge, dass, wenn die nächste Palette 21 auf das Trennglied 30 aufläuft, das Trennglied 30 gegen diese Kante 16b drückt (Fig. 3a, Fig. 4a). Erst wenn die vordere Palette 20 abgenommen ist, mithin die Auflaufklappe 11 in die Stellung gemäß Fig. 3 verschwenkt, wird aufgrund der Zugfeder 18 die Kuppelstange in Richtung des Pfeiles 61 verschoben; hierbei ragt das Trennglied zwar immer noch in das Arretierauge 16a, allerdings ist das Arretierauge so weit verschoben worden, dass bei Anstoßen der nächsten Palette an das Trennglied 30 das Trennglied den Weg freigibt, in dem das Trennglied in die Position gemäß Fig. 3 überführt wird.

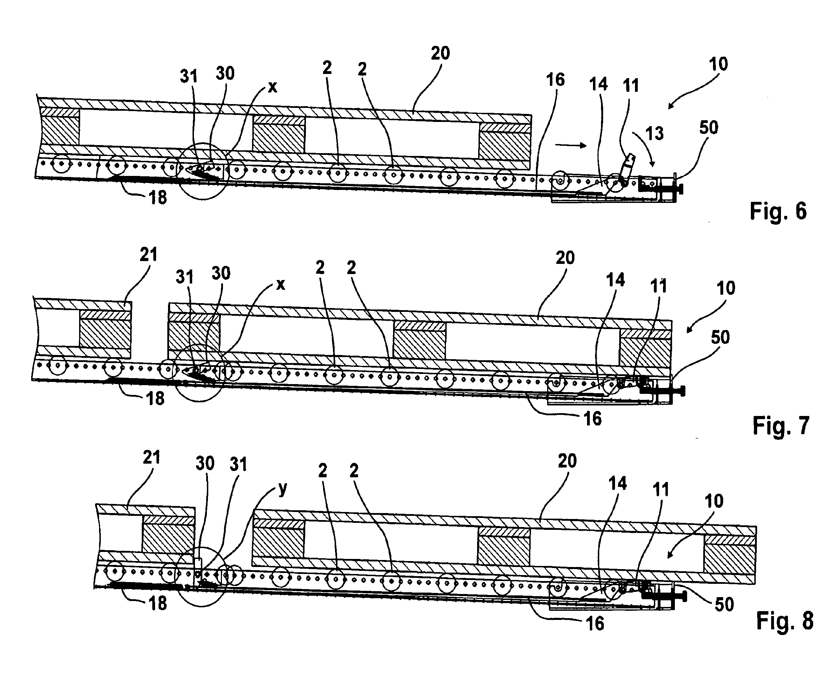

Betrachtet man nunmehr die Fig. 6 bis 8 sowie die Fig. 9, so ergibt sich Folgendes:

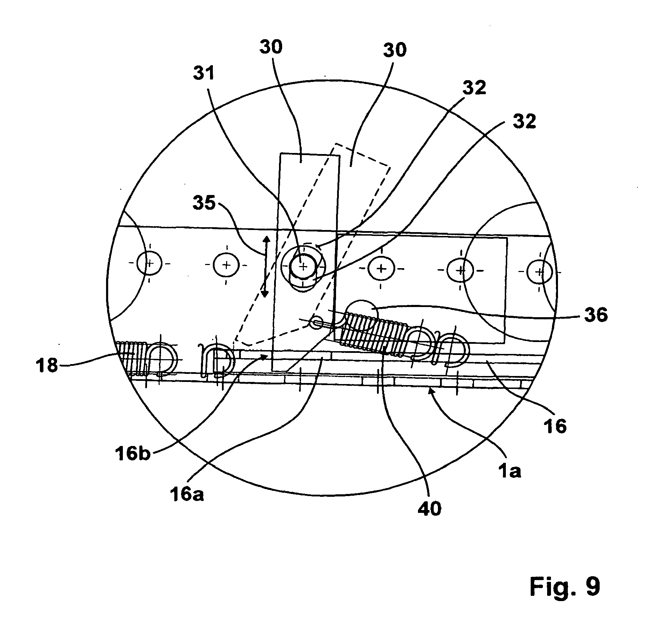

Die Palette 20, die nunmehr über die Rollenbahn läuft, ist ein Stück länger als vorgesehen. In Fig. 7 ist erkennbar, dass die Palette 20 über dem Trennglied 30 steht, obwohl die Palette am vorderen Ende am Anschlag liegt. Üblicherweise wäre es in dieser Position so, dass das Trennglied 30 frei ist, mithin in die Sperrposition übergehen kann. Dies wird jedoch, wie bereits ausgeführt durch die aufstehende Palette verhindert. Nach dem Stand der Technik war es hierbei so, dass aufgrund der Zwangskopplung des Trenngliedes über die Kuppelstange mit der Auflaufeinrichtung nunmehr das Trennglied bzw. die Trenneinrichtung insgesamt gegen die Palette und gegen die Rollenleiste verspannt wird. Dass es hierbei zu Schäden an der Einrichtung kommen kann, liegt auf der Hand. Geht man im Folgenden nunmehr davon aus, dass die Palette über den Anschlag 50 angehoben und über die Auflaufeinrichtung abgezogen wird, dann wird zu irgendeinem Zeitpunkt das Trennglied 30 freigegeben. Aufgrund der Kraft der Feder 40 wird dann das Trennglied 30 in die Sperrposition überführt. Es befindet sich allerdings in diesem Moment die Kuppelstange mit dem Arretierauge in der Sperrposition, da die Auflaufklappe abgeschwenkt ist, da, wie bereits ausgeführt die Palette noch über der Auflaufklappe liegt. Das als Finger ausgebildete Trennglied 30 würde nun nicht in das Arretierauge einlaufen, wie dies erforderlich ist, um die Sperrposition einnehmen zu können, sondern das Trennglied 30 würde vielmehr am hinteren Rand des Arretierauges 16a auf der Kuppelstange 16 aufliegen. Dadurch nun, dass das Trennglied 30 über ein Langloch 32 verfügt, kann sich das Trennglied 30 gegenüber der Achse 31 nach oben verschieben, mit der Folge, dass es über die Kante der Kuppelstange in das Arretierauge 16a einrasten kann und dann in Sperrposition verbleibt. Das Trennglied sperrt dann den Weg für die nächste Palette. Der Weg des Trenngliedes 30 über den Rand des Arretierauges der Kuppelstange 16 in das Arretierauge hinein in die Arretierstellung der Kuppelstange ergibt sich deutlich aus der Darstellung gemäß Fig. 9.

Durch die erfindungsgemäße Trenneinrichtung wird ebenfalls erreicht, dass beispielsweise die mittlere Rollenbahn entnahmeseitig verkürzt werden kann, um dem Bedienpersonal das Zwischentreten zwischen die Rollenbahn zu erleichtern, wenn Güter von den Paletten entnommen werden sollen, oder wenn die Paletten über die Anschläge der Rollenleisten herabgezogen werden. Dies deshalb, weil eine Zwangssteuerung des Trenngliedes durch die Auflaufeinrichtung nicht mehr stattfindet, was bedeutet, dass selbst bei bereits auf der Auflaufklappe der mittleren Rollenleiste aufstehender Palette die Bewegung des Trenngliedes nur durch die Palette selbst eingeschränkt ist, aber nicht durch die Kuppelstange, wie dies nach dem Stand der Technik der Fall ist. Wenn insofern die mittlere Rollenleiste verkürzt werden kann, dann ist die Verletzungsgefahr für das Personal, wenn diese zwischen die beiden äußeren Rollenleisten eintreten wesentlich geringer.

### Bezugszeichenliste:

- 1: Rollenbahn
- 1a: Rollenleiste
- 2: Rollen
- 3: Bremsrollen
- 4: entnahmeseitiges Ende
- 10: Auflaufeinrichtung
- 11: Auflaufklappe
- 13: Pfeil
- 14: Zugbock
- 16: Kuppelstange
- 16a: Arretierauge
- 16b: hintere Kante
- 18: Zugfeder
- 20: Palette
- 21: Palette
- 30: Trennglied
- 31: Achse
- 32: Langloch
- 35: Doppelpfeil (Fig. 9)
- 36: Bolzen
- 38: Pfeil
- 40: Feder
- 50: Anschlag
- 60: Pfeil
- 61: Pfeil

## Patentansprüche

1. Rollenbahn (1) zum Transport von Stückgütern, z. B. Paletten oder Kisten, mit mindestens einer Schiene (1 a) zur Aufnahme mindestens eines Trennglieds (30) und einer Auflaufeinrichtung (10), wobei die Auflaufeinrichtung (10) am entnahmeseitigen Ende (4) der Rollenschiene (1a) angeordnet ist, wobei die Auflaufeinrichtung (10) mit dem Trennglied (30) durch ein Kuppelglied in Verbindung bringbar ist (Anspruch 5), wobei das Trennglied (30) um eine Achse (31) (Anspruch 3) zwischen einer Passierposition und einer Sperrposition schwenkbar an der Rollenschiene (1a) angeordnet ist,
**dadurch gekennzeichnet,**
**dass** das Trennglied (30) bei entlasteter Auflaufeinrichtung nach Passieren eines Stückgutes selbstständig in die Sperrposition übergeht,
**dass** das Kuppelglied (16) ein Arretierauge (16a) aufweist, in das das Trennglied in der Sperrposition eingreift, wobei das Trennglied (30) ein Langloch (32) zur Aufnahme durch die Achse (31) aufweist, wobei das Trennglied (30) parallel zur Längsachse des Trenngliedes (30) verschieblich auf der Achse (31) verschwenkbar gelagert ist.

2. Rollenbahn (1) nach Anspruch 1,
**dadurch gekennzeichnet,**
**dass** das Trennglied (30) als Finger ausgebildet ist.

3. Rollenbahn (1) nach einem der voranstehenden Ansprüche,
**dadurch gekennzeichnet,**
**dass** das Trennglied (30) unter der Last einer Federeinrichtung (40) in die Sperrposition überführbar ist.

4. Rollenbahn (1) nach nach einem der voranstehenden Ansprüche,
**dadurch gekennzeichnet,**
**dass** das Kuppelglied (16) als Kuppelstange ausgebildet ist.

5. Rollenbahn (1) nach einem dervoranstehenden Ansprüche,
**dadurch gekennzeichnet,**
**dass** das Kuppelglied (16) federbelastet (18) mit der Auflaufeinrichtung (10) in Verbindung steht.

6. Rollenbahn (1) nach einem der voranstehenden Ansprüche,
**dadurch gekennzeichnet,**
**dass** die Auflaufeinrichtung (10) eine Auflaufklappe (11) aufweist.

## Claims

1. A roller conveyor (1) for transporting piece goods, e.g. pallets or crates, with at least one track (1a) for receiving at least one separation member (30) and one ramp device (10), wherein the ramp device (10) is disposed on the removal-side end (4) of the roller track (1a), wherein the ramp device (10) is connectable with the separation member (30) by way of a coupling member (claim 5), wherein the separation member (30) is disposed on the roller track (1 a) so as to be swivellable around an axis (31) (claim 3) between a passing position and a blocking position,
**characterized in that**
when the ramp device is unloaded after passage of a piece good, the separation member (30) autonomously transitions into the blocking position,
that the coupling member (16) has an arresting eye (16a) with which the separation member engages in the blocking position, wherein the separation member (30) has a long hole (32) to be received by the axis (31), wherein the separation member (30) is swivellably mounted on the axis (31) so as to be displaceable parallel to the longitudinal axis of the separation member (30).

2. The roller conveyor (1) according to claim 1,
**characterized in that**
the separation member (30) is configured as a finger.

3. The roller conveyor (1) according to one of the afore-mentioned claims,
**characterized in that**
the separation member (30) is transferrable into the blocking position under the load of a spring device (40).

4. The roller conveyor (1) according to one of the afore-mentioned claims,
**characterized in that**
the coupling member (16) is designed as a coupling rod.

5. The roller conveyor (1) according to one of the afore-mentioned claims,
**characterized in that**
the coupling member (16) is connected to the ramp device (10) under the load of a spring (18).

6. The roller conveyor (1) according to one of the afore-mentioned claims,
**characterized in that**
the ramp device (10) has a ramp flap (11).

## Revendications

1. Bande transporteuse à rouleaux (1) pour le transport d'objets individuels, par exemple de palettes ou de caisses, avec au moins un rail (1 a) pour recevoir au moins un organe de séparation (30) et une installation de chargement (10), dans lequel l'installation de chargement (10) se situe du côté de l'extrémité réceptrice (4) du rail de roulement (1 a), dans lequel l'installation de chargement (10) peut être mis en liaison avec l'organe de séparation (30) par un organe de couplage (Revendication 5), par lequel l'organe de séparation (30) est monté sur le rail de roulement (1 a), et peut être basculé autour d'un axe (31) (Revendication 3) entre une position passante et une position de verrouillage,
**caractérisée en ce que,**
l'organe de séparation (30) passe automatiquement dans la position de verrouillage après le passage d'un objet individuel, après la libération de l'installation de chargement,
l'organe de couplage (16) comporte un capteur d'arrêt (16a), dans lequel l'organe de séparation est engagé dans la position de verrouillage, dans lequel l'organe de séparation (30) comporte un trou oblong (32) pour l'engagement de l'axe (31), dans lequel l'organe de séparation (30) est parallèle à l'axe allongé de l'organe de séparation (30), et peut être basculé en coulissant sur l'axe (31).

2. Bande transporteuse à rouleaux (1) selon la revendication 1,
**caractérisée en ce que,**
l'organe de séparation (30) est constitué d'un doigt.

3. Bande transporteuse à rouleaux (1) selon l'une des revendications précédentes,
**caractérisée en ce que,**
l'organe de séparation (30) peut être dépassé dans la position de verrouillage, sous la contrainte de la force d'un dispositif à ressort (40).

4. Bande transporteuse à rouleaux (1) selon l'une des revendications précédentes,
**caractérisée en ce que,**
l'organe de couplage (16) est constitué d'une barre de couplage.

5. Bande transporteuse à rouleaux (1) selon l'une des revendications précédentes,
**caractérisée en ce que,**
l'organe de couplage (16) est en liaison avec l'installation de chargement (10), sous la contrainte d'un ressort (18).

6. Bande transporteuse à rouleaux (1) selon l'une des revendications précédentes,
**caractérisée en ce que,**
l'installation de chargement (10) comporte un clapet d'arrêt (11).
